# EUROPÄISCHE PATENTANMELDUNG

(11) **EP 2 338 942 A2**
(43) Veröffentlichungstag der Anmeldung: **29.06.2011**
(21) Anmeldenummer: 10195622.5
(22) Anmeldetag: 17.12.2010
(51) Int. Cl.: C09D 5/14, C09D 7/12, C09D 189/00, C09D 199/00

(54) **Substrat mit antimikrobieller Beschichtung, ein antimikrobielles Verpackungsmaterial, sowie Verfahren zur Herstellung derselben**

(30) Priorität: 23.12.2009 DE 102009059320
(71) Anmelder: Cofresco Frischhalteprodukte GmbH & Co. KG, 32427 Minden (DE); Friedrich-Alexander-Universität Erlangen-Nürnberg, 91054 Erlangen (DE)
(72) Erfinder: Arning, Dr. Hans-Jürgen, 32312, Lübbecke (DE); Pischetsreider, Prof. Dr. Monika, 91080, Spardorf (DE); Sauer, Tanja, 91054, Erlangen (DE); Müller, Ulla, 95369, Untersteinach (DE); Pichner, Dr. Rohtraud, 95336, Mainleus (DE); Hauser, Carolin, 85354 Freising (DE)
(74) Vertreter: Dantz, Jan Henning

(57) **Zusammenfassung**

Es wird ein Substrat mit antimikrobieller Beschichtung beschrieben, wobei die Beschichtung mindestens ein Maillard-Produkt enthält, sowie ein antimikrobielles Verpackungsmaterial, ein Verfahren zu deren Herstellung, sowie ein antimikrobielles Reinigungsmittel.

## Beschreibung

Die Erfindung betrifft ein Substrat mit antimikrobieller Beschichtung, ein antimikrobielles Verpackungsmaterial, sowie ein Verfahren zur Herstellung eines derartigen Substrats und eines derartigen Verpackungsmaterials und ein antimikrobielles Reinigungsmittel nach den Oberbegriffen der Ansprüche 1, 5, 8, 12 und 14.

Lebensmittel und wässrige Lösungen im Lebensmittelbereich können als Nährböden für Bakterienstämme dienen. Insbesondere bei einer tagelangen Aufbewahrung entweder in Frühstücksbeuteln, Frühstücksboxen oder im Müll kann es zur vermehrten Bildung von Keimen und Bakterien kommen.

Die vorliegende Erfindung setzt daher bei der Aufgabe an, ein Substrat und ein Verpackungsmaterial, sowie Verfahren zu deren Herstellung bereitzustellen, welche einen hygienischeren Umgang mit einem Lebensmittel ermöglicht.

Die Erfindung löst diese Aufgabe durch den Gegenstand der Ansprüche 1, 5, 8, 12 und 14.

Erfindungsgemäß weist ein Substrat eine antimikrobielle Beschichtung auf, die ein Maillard-Produkt, insbesondere Melanoidin, enthält.

Durch den Einsatz von Maillard-Produkten kommt es bei Kontakt mit Lebensmitteln zur Bildung von geringen Mengen Wasserstoffperoxid. Das freigesetzte Wasserstoffperoxid greift Mikroorganismen, wie beispielsweise Pilze, Algen, Protozoen und insbesondere Bakterien an.

Dabei ist der Einsatz von Maillard-Produkten im Lebensmittelbereich unbedenklich, da sie ungiftig, biologisch abbaubar und natürlicher Bestandteil vieler Lebensmittel sind.

Es ist vorteilhaft, wenn die Maillard-Produkt-haltige Beschichtung als ein Lack auf die Oberfläche des Substrats aufgebracht wird und auf dieser Oberfläche aushärtet.

Dadurch kann eine homogene Verteilung des Melanoidins auf der Oberfläche des Substrats erreicht werden.

Das Substrat kann als Kunststofffolie (Frischhaltefolie), Aluminiumfolie, Aluminiumbeutel, Beutel aus Kunststoff, Beutel aus Papier, Kühlkörper für Getränke, Anzeigemittel für die Füllstandshöhe in einem Kaffeeautomaten oder Wasserkocher ausgebildet sein. Dies ist von Vorteil, da diese Produkte vorwiegend mit Lebensmitteln in Kontakt kommen.

Es ist weiterhin von Vorteil, wenn das Substrat als lebensmittelberührende Seiten eines Vorratsbehälters, beispielsweise als Innenraum einer Frühstücksbox, ausgebildet ist, da dadurch eine Materialersparnis hinsichtlich des Beschichtungsmaterials erreicht wird.

Dabei kann der Vorratsbehälter vorteilhaft starr oder verformbar sein, beispielsweise als Box oder als Beutel. Somit ist ein universeller Einsatz der Maillard-Produkt-haltigen Beschichtung möglich.

Erfindungsgemäß weist ein antimikrobielles Verpackungsmaterial Maillard-Produkte als eine Materialkomponente auf. Dabei kann das Verpackungsmaterial mit einer Maillard-Produkt-haltigen Beschichtung versehen sein oder Maillard-Produkte während der Herstellung in das Verpackungsmaterial eingebracht werden, beispielsweise durch Diffusion.

Durch das Verpackungsmaterial wird das Wachstum von Mikroorganismen verhindert. Gleichzeitig schützt das Verpackungsmaterial vor Schmutz und Keimen, die aus der Umgebung an das Lebensmittel herangetragen werden.

Das Maillard-Produkt-haltige Verpackungsmaterial kann vorteilhaft durch ein Extrusions- und/oder Spritzgussverfahren hergestellt werden, wodurch Kunststofffolien und Kunststoffboxen, beispielsweise aus Polyethylen (PE).

Erfindungsgemäß umfasst ein Verfahren zur Herstellung eines Substrats mit antimikrobieller Beschichtung folgende Schritte:
a) Bereitstellen eines Substrats,
b) Bereitstellen einer Mischung für die Beschichtung des Substrats, wobei die Mischung zumindest ein Maillard-Produkt enthält,
c) Aufbringen der Mischung auf die Oberfläche des Substrates und
d) Aushärten der Mischung zu einer Maillard-Produkt-haltigen Beschichtung.

Dieses Verfahren kann auch für die Massenproduktion verfahrenstechnisch umgesetzt werden. Die Mischung für die Beschichtung des Substrats richtet sich nach dem jeweiligen Substrat und dessen Einsatzgebiet.

Durch dieses Verfahren können u.a. individuell dosierbare Folien, insbesondere als Frischhaltefolie, Aluminiumfolie, Backpapier beispielsweise als Antihaft-Back-Alufolie oder auch Antihaft-Backpapier, Frischhalte-, Frühstücks- oder Gefrierbeutel, Mülltüten, Säcke, Einkaufstaschen, Frischhalte-, Frühstücks-, Transport-, Abfall- oder Gefrierboxen unveränderlicher Form, beispielsweise aus Kunststoff oder Pappe mit einer antimikrobiellen Beschichtung versehen werden.

Dabei ist es von Vorteil, wenn das Aufbringen der Maillard-Produkt-haltigen Mischung in einem Streich-, Sprüh- oder Tauchverfahren erfolgt, da diese Verfahren für die Massenproduktion geeignet sind.

Für eine bessere Anhaftung der Beschichtung und zur Schaffung einer größeren Grenzfläche zwischen Beschichtung und Substrat ist es von Vorteil, wenn das Bereitstellen des Substrats eine chemische oder elektrostatische Vorbehandlung umfasst.

Es ist weiterhin von Vorteil, wenn das Bereitstellen der Maillard-Produkt-haltigen Beschichtung die Gewinnung des Maillard-Produktes aus Kaffee-Extrakten und/oder Abfallprodukten des Kaffees erfolgt, da somit eine hohe Verfügbarkeit an Maillard-Produkten, insbesondere Melanoidinen, gewährleistet ist. Zudem wird die Akzeptanz des Produktes beim Kunden erhöht.

Erfindungsgemäß umfasst ein Verfahren zur Herstellung von antimikrobiellem Verpackungsmaterial, folgende Schritte
a) Bereitstellen einer Mischung zur Herstellung eines Formkörpers oder einer Folie,
b) Zugeben zumindest einer Maillard-Produkt-haltigen Komponente zu der Mischung und
c) maschinelles Ausformen einer Folie oder eines Formkörpers aus Maillard-Produkt-haltigem Material.

Dabei kann das Maillard-Produkt bereits während des bislang bekannten Herstellungsprozesses in das Material eingebracht werden. Zusätzlicher apparativer Aufwand, wie beispielsweise das Bereitstellen einer Beschichtungsanlage kann somit vermieden werden.

Das Ausformen der Folie oder des Formkörpers kann vorteilhaft in einem Spritzguss- oder Extrusionsverfahren erfolgt.

Einige Monomer-, Prepolymer- oder Polymermischungen, insbesondere Thermoplasten werden bei höheren Temperaturen ausgeformt. Ein kurzzeitiges Überschreiten der Zersetzungstemperatur des Maillard-Produktes führt zu einer Minderung der Maillard-Produkt-Konzentration im Verpackungsmaterial. Daher ist es von Vorteil, wenn die Temperatur bei der Ausformung des Formteils oder der Folie nicht die Zersetzungstemperatur des jeweiligen Maillard-Pradukts überschreitet.

Erfindungsgemäß weist ein antimikrobielles Reinigungsmittel zur Reinigung im Lebensmittelbereich mindestens ein Maillard-Produkt auf. Dabei werden Mikroorganismen, welche sich beispielsweise in angetrockneten Lebensmittelresten, beispielsweise auf Arbeitsplatten in Küchen angesammelt haben, durch das bzw. die Maillard-Produkte angegriffen.

Im Folgenden werden bevorzugte Ausführungsbeispiele der vorliegenden Erfindung beschrieben.

Mit Maillard-Produkten, insbesondere Melanoidin beschichtete bzw. Maillard-Produkte enthaltende Verpackungsmaterialien verhindern die Vermehrung von Mikroorganismen an der Oberfläche der darin enthaltenen Lebensmittel. Die Haltbarkeit der Lebensmittel, die in derartigen Verpackungsmaterialien aufbewahrt werden, wird verlängert.

Die besonders bevorzugt eingesetzten Melanoidine entstehen beispielsweise als Nebenprodukte der Maillardreaktion, durch die Reaktion einer Carbonylgruppe eines Zuckers mit der Aminogruppe einer Aminosäure und gegebenenfalls mit anderen Lebensmittelbestandteilen, wie z.B. Polyphenolen.

Melanoidin- und andere Maillard-Produkt-Verbindungen können aus Abfallprodukten des Kaffees isoliert werden. Somit ist das Ausgangsmaterial für eine Maillard-Produkt-haltige Beschichtung oder ein Maillard-Produkt-haltiges Verpackungsmaterial günstig und leicht verfügbar.

Eine konservierende Wirkung von Maillard-Produkten war bisher unbekannt. Maillard-Produkte sind zudem biologisch abbaubar. Eine giftige Wirkung von Maillard-Produkten gegenüber Säugetieren oder Menschen als solches ist nicht bekannt.

Die Beschichtung von Verpackungsmaterialien aus biologisch abbaubaren Produkten wie Polysacchariden mit Maillard-Produkt-haltigen Material ist besonders vorteilhaft, da Maillard-Produkte den Abbauprozess nicht beeinträchtigt.

Maillard-Produkte werden bevorzugt mittels geeigneter Extraktionsverfahren aus geröstetem Kaffee gewonnen. Dafür wird zum einen der gemahlene Kaffee verwendet. Zum anderen werden insbesondere Melanoidine aus dem Abfallprodukt des Kaffees, dem Kaffeesatz gewonnen. Damit ist das Ausgangsmaterial für die Melanoidin-Herstellung günstig und leicht zu beschaffen. Melanoidine können alternativ auch aus anderen Röstprodukten, wie beispielsweise Malz, oder auch Brot, insbesondere dessen Kruste hergestellt werden. Weiterhin können Melanoidine und andere Maillard-Produkte aus Modellen für diese Lebensmittel gewonnen werden. Diese Modelle enthalten in der Regel Aminosäuren oder andere Aminbestandteile, Zucker oder andere Carbonylverbindungen und gegenebenfalls andere Lebensmittelbestandteile und werden thermisch behandelt.

Somit sind Melanoidine und andere Maillard-Produkte insbesondere in der Lebensmittelindustrie vorteilhaft anwendbar.

Melanoidine und andere Maillard-Produkte können zu einer Lackrezeptur zugegeben werden und mit einem entsprechenden Verfahren (z.B. Beschichten, Besprühen oder Tauchen) auf eine Kunststoff-, Metall- oder Papieroberfläche eines Substrats aufgebracht werden.

Dieser Maillard-Produkt-haltige Lack kann im Anschluss beispielsweise aufgrund von Polykondensationsverfahren oder anderer Polymerisationsverfahren auf der Oberfläche des Substrats polymerisieren, so dass eine auf der Oberfläche anhaftende melanoidinhaltige Beschichtung ausgebildet wird.

Die Beschichtung kann in einem Tauch-, Sprüh- oder Streichverfahren oder jedem anderen Beschichtungsverfahren auf die Oberfläche des Substrats aufgebracht werden.

Das derart beschichtete Substrat ist dabei vorzugsweise ein Verpackungsmaterial

Falls die melanoidinhaltige oder Maillard-Produkt-haltige Beschichtung im Haushalt zum Einsatz kommt, insbesondere im Lebensmittelbereich, so ist darauf zu achten, dass die Komponenten der Lackrezeptur lebensmittelverträglich ist bzw. nur von geringem Risiko für die Gesundheit des Menschen ist.

Neben einer Beschichtung von geeigneten Verpackungsmaterialien ist es ebenso möglich, das Maillard-Produkt bereits in das Verpackungsmaterial selbst einzubringen, bevor es in einem weiteren Verarbeitungsschritt seine endgültige Form erhält.

Dieser Verarbeitungsschritt kann beispielsweise ein Extrusionsverfahren, Coextrusionsverfahren, ein Extrusionsblasen, ein Gießverfahren oder ein SpritzGießverfahren sein. Dadurch können zusätzliche Herstellungsschritte, welche eine Beschichtung mit sich bringen, entfallen

Das Verpackungsmaterial und das Beschichtungsmaterial umfasst beispielsweise Aluminium, oder Zellstoff, Polyvinylchlorid, Polyolefine, Polyethylen (PE) oder Polypropylen (PP) oder Polysaccharide, wie beispielsweise Cellulose oder Stärke, insbesondere Mais- oder Kartoffelstärke.

Das Verpackungsmaterial kann dabei vorteilhafterweise als Kunststofffolie, insbesondere Frischhaltefolie, Alufolie, Backpapier, beispielsweise auch Antihaft-Backalufolie oder Antihaft-Backpapier, Frischhalte-, Frühstücks- oder Gefrierbeutel, Mülltüten, Müllsäcke, Kunststoffsäcke oder Einkaufstaschen sowie Frischhalte-, Frühstücks-, Transport-, Abfall- oder Gefrierboxen ausgeformt sein.

Somit kann das Verpackungsmaterial sowohl aus Kunststoff, Papier oder Metall bestehen, wobei die Melanoidine oder anderen Maillard-Produkte als Beschichtung in einer Beschichtung auf das Material aufgebracht oder während des Ausformens in das Material eingebracht sind.

In verschiedenen Anwendungen, beispielsweise bei einer Folie oder bei Backpapier ist es vorteilhaft, eine beidseitige Beschichtung vorzunehmen, so dass das Verpackungsmaterial von beiden Seiten mit Lebensmitteln in Kontakt treten kann und eine bakterielle Zersetzung dieser Lebensmittel vorteilhaft verhindert wird.

Bevorzugt kann das Verpackungsmaterial vor der Beschichtung einer chemischen und/oder einer physikalischen Vorbehandlung unterzogen werden. Bei der chemischen Vorbehandlung handelt es sich beispielsweise um ein Vorbeschichtung, ein Ätzverfahren oder einer Oberflächenleimung. Bei einer physikalischen Vorbehandlung kann es sich hingegen beispielsweise um eine Schleifbearbeitung, eine Prägung oder eine elektrostatische Aufladung des Verpackungsmaterials, um die Haftung des Maillard-Produkt-haltigen Materials auf der Oberfläche zu erhöhen.

In einem weiteren bevorzugten Ausführungsbeispiel kann Melanoidin oder ein anderes Maillard-Produkt in das Material einer Selbstklebefolie eingebracht oder auf die Oberfläche der Selbstklebefolie als Beschichtung aufgebracht werden, so dass diese Folie beispielsweise an die Innenseite von wasserspeichernden Behältern, insbesondere in der Lebensmittelindustrie aufgebracht werden kann.

Dabei ist beim Einbringen des Mailard-Produkts in eine Polymermischung, beispielsweise in eine Beschichtung und/oder in ein Verpackungsmaterial darauf zu achten, dass die Verarbeitungstemperatur, welcher das Melanoidin ausgesetzt ist, nicht deren Zersetzungstemperatur überschreitet.

In einem weiteren Ausführungsbeispiel kann eine flüssige Suspension auf eine Kunststoff oder papierene Oberfläche eines Verpackungsmaterials aufgebracht werden und anschließend in das Verpackungsmaterial eindiffundieren. Alternativ dazu kann das Verpackungsmaterial auch in der flüssigen melanoidinhaltigen Suspension getränkt werden, wodurch das Maillard-Produkt das Verpackungsmaterial penetriert.

In einer weiteren Ausführungsvariante können Maillard-Produkt-haltige Kunststoffkörper mit einem Maillard-Produkt-Anteil von vorzugsweise 20 - 80, insbesondere 50 - 70 Gew% Melanoidin oder einem anderen Maillard-Produkt in einem Spritzguss- oder Extrusionsverfahren abgeformt werden, um beispielsweise zusätzlich zu Lebensmitteln in eine Frühstücksbox oder dergleichen gelegt werden zu können und so in Kontakt mit den in der Frühstücksbox aufbewahrten Nahrungsmitteln treten zu können. Dabei kann die Wirkung des Maillard-Produkts sowohl durch Kontakt der Lebensmittel mit oder auf der Oberfläche der Kunststoffkörper eintreten, aber auch durch Migration in die Lebensmittel oder über die Gasphase.

In einer weiteren Ausführungsform kann das Maillard-Produkt derart auf der Oberfläche eines Körpers aufgebracht sein, dass sich das Maillard-Produkt bei Kontakt mit einem Lösungsmittel von der Oberfläche löst und in das Lebensmittel hinein migrieren kann, um dort seine antimikrobielle Wirkung zu entfalten. Dies kann beispielsweise durch die Beschichtung von Eiswürfeln aus Kunststoff erfolgen.

Darüber hinaus kann das Maillard-Produkt auch als Beschichtung auf Substraten derart aufgebracht sein, dass sie bei höheren Temperaturen über die Gasphase in ein entsprechendes Lebensmittel einzudiffundieren.

Dies kann beispielsweise auch durch Wasserdampf als Trägermaterial erfolgen, wodurch das Maillard-Produkt in das Lebensmittel hineindiffundieren bzw. hineinmigrieren kann.

Darüber hinaus kann das Maillard-Produkt ebenfalls als antimikrobielle Komponente in einem Reinigungsmittel zum Einsatz kommen, welches insbesondere in dem Bereich der Lebensmittelindustrie zum Einsatz kommt.

## Patentansprüche

1. Substrat mit antimikrobieller Beschichtung, **dadurch gekennzeichnet, dass** die Beschichtung mindestens ein Maillard-Produkt, insbesondere Melanoidin, enthält.

2. Substrat nach Anspruch 1, **dadurch gekennzeichnet, dass** die Maillard-Produkt-haltige Beschichtung als ein Lack auf die Oberfläche des Substrats aufgebracht und auf der Oberfläche ausgehärtet ist.

3. Substrat nach Anspruch 1 oder 2, **dadurch gekennzeichnet, dass** das Substrat als Kunststofffolie, Kunststoffbeutel Aluminiumfolie, Aluminiumbeutel, Papierbeutel, Papierbahn oder Kunststoffformkörper ausgebildet ist.

4. Substrat nach einem der vorhergehenden Ansprüche, **dadurch gekennzeichnet, dass** das Substrat als Lebensmittel berührende Seiten eines Vorratsbehälters ausgebildet ist.

5. Antimikrobielles Verpackungsmaterial, **dadurch gekennzeichnet, dass** das Verpackungsmaterial mindestens ein Maillard-Produkt, insbesondere Melanoidin, enthält.

6. Antimikrobielles Verpackungsmaterial nach Anspruch 5, **dadurch gekennzeichnet, dass** das Verpackungsmaterial durch ein Extrusions- und/oder Spritzgussverfahren hergestellt ist.

7. Antimikrobielles Verpackungsmaterial nach Anspruch 5 oder 6, **dadurch gekennzeichnet, dass** das Verpackungsmaterial als Kunststofffolie, Papierbahn oder Metallfolie, als Kunststoff-, Metall- oder Papierbeutel oder als vorgeformter Behälter aus Kunststoff, Metall, Pappe oder Papier ausgebildet ist.

8. Verfahren zur Herstellung eines Substrats mit antimikrobieller Beschichtung, **gekennzeichnet durch** folgende Schritte
a) Bereitstellen eines Substrats,
b) Bereitstellen einer Mischung für die Beschichtung des Substrats, wobei die Mischung zumindest ein Maillard-Produkt enthält,
c) Aufbringen der Mischung auf die Oberfläche des Substrates und
d) Aushärten der Mischung zu einer Maillard-Produkt-haltigen Beschichtung.

9. Verfahren nach Anspruch 8, **dadurch gekennzeichnet, dass** das Aufbringen der Maillard-Produkt-haltigen Mischung in einem Streich-, Sprüh- oder Tauchverfahren erfolgt.

10. Verfahren nach Anspruch 8 oder 9, **dadurch gekennzeichnet, dass** das Bereitstellen des Substrats eine chemische oder elektrostatische Vorbehandlung umfasst.

11. Verfahren nach einem der vorhergehenden Ansprüche, **dadurch gekennzeichnet, dass** das Bereitstellen der Maillard-Produkt-haltigen Beschichtung durch die Gewinnung von Melanoidin aus Kaffee-Extrakten und/oder Abfallprodukten des Kaffees oder aus Modellmischungen bestehend aus erhitzen Mischung von Aminen, Carbonylverbindung und eventuell anderen Lebensmittelbestandteilen erfolgt.

12. Verfahren zur Herstellung von antimikrobiellem Verpackungsmaterial, **gekennzeichnet durch** folgende Schritte
a) Bereitstellen einer Mischung zur Herstellung eines Formkörpers oder einer Folie,
b) Zugabe zumindest einer Maillard-Produkt-haltigen Komponente zu der Mischung und
c) maschinelles Ausformen einer Folie oder eines Formkörpers aus Maillard-Produkt-haltigem Material.

13. Verfahren nach Anspruch 12 oder 13, **dadurch gekennzeichnet, dass** die Temperatur bei der Ausformung des Formteils oder der Folie nicht die Zersetzungstemperatur des jeweiligen Maillard-Produktes überschreitet.

14. Antimikrobielles Reinigungsmittel, **dadurch gekennzeichnet, dass** das Reinigungsmittel mindestens ein Maillard-Produkt, insbesondere Melanoidin, enthält.
